**Europäisches Patentamt**

**European Patent Office**

**Office européen des brevets**

(19)

(11) Veröffentlichungsnummer: **0 027 232**
**A2**

(12) **EUROPÄISCHE PATENTANMELDUNG**

(21) Anmeldenummer: 80106047.6

(22) Anmeldetag: 06.10.80

(51) Int. Cl.³: **G 01 C 21/14**

(30) Priorität: 11.10.79 DE 2941331

(43) Veröffentlichungstag der Anmeldung:
22.04.81 Patentblatt 81/16

(84) Benannte Vertragsstaaten:
AT BE CH DE FR GB IT LI NL SE

(71) Anmelder: **SIEMENS AKTIENGESELLSCHAFT Berlin und München**
**Postfach 22 02 61**
**D-8000 München 22(DE)**

(72) Erfinder: **von Tomkewitsch, Romuald, Dipl.-Ing.**
**Winklweg 8**
**D-8026 Ebenhausen(DE)**

(54) Autarke Navigationseinrichtung für Strassenfahrzeuge.

(57) Die Navigationseinrichtung dient zur autarken Zielführung für Straßenfahrzeuge. Zu Beginn einer Fahrt wird ein Zielvektor in Form von Zielkoordinaten (x, y) über eine Eingabeeinrichtung (EG) eingegeben. Während der Fahrt wird laufend der zurückgelegte Weg nach Betrag und Richtung mit einer Koppelnavigationseinrichtung (KN) ermittelt. Aus diesen gemessenen Wegvektoren und den eingegebenen relativen Zielkoordinaten wird laufend ein Zielvektor (ZA, DA) ermittelt und mit einer Anzeigeeinrichtung (AG) im Gesichtsfeld des Fahrers angezeigt.

EP 0 027 232 A2

./...

Croydon Printing Company Ltd.

FIG 3

SIEMENS AKTIENGESELLSCHAFT       Unser Zeichen
Berlin und München                           VPA     79 P 2 4 0 5 EUR

Autarke Navigationseinrichtung für Straßenfahrzeuge

Die Erfindung bezieht sich auf eine autarke Navigationseinrichtung für Straßenfahrzeuge, wobei im Fahrzeug über
eine Weg-Meßeinrichtung sowie eine Winkel-Meßeinrichtung
der jeweils zurückgelegte Fahrtweg nach Betrag und Richtung ermittelbar ist.

Das erwähnte Prinzip der Koppelnavigation ist an sich bereits seit langem bekannt, wobei der Einsatz bisher vornehmlich für Ortungssysteme von Polizeifahrzeugen u. dgl.
in Betracht gezogen wurde. In diesen Fällen wird der durch
Koppelnavigation im Fahrzeug ermittelte Wegvektor an eine
Zentrale gemeldet, welche ihrerseits daraus die Fahrzeugposition berechnen und damit entsprechend disponieren
kann.

Leitsysteme für Straßenfahrzeuge im Individualverkehr
sind zwar vielfach bereits vorgeschlagen und in einzelnen
Fällen auch an Versuchsstrecken praktiziert worden, doch
scheiterte ihr großräumiger Einsatz bisher daran, daß

Pr 1 Fra / 11.10.1979

diese Systeme eine verhältnismäßig aufwendige Infrastruktur voraussetzen. Bei diesen Systemen sind zentrale und dezentrale ortsfeste Einrichtungen zur Ermittlung und Übertragung von Leitempfehlungen an die einzelnen Fahrzeuge erforderlich.

Unabhängig von solchen aufwendigen Zielführungssystemen besteht jedoch vielfach lediglich der Wunsch nach einer einfachen Orientierungshilfe, die unabhängig von der Verkehrslage ist. Namentlich in größeren Städten verliert ein ortsunkundiger Autofahrer leicht die Orientierung, selbst wenn er sich zu Beginn der Fahrt anhand eines Stadtplanes eine bestimmte Route vorgenommen hat. Denn ein solcher Plan gibt keine Auskunft über Verkehrshindernisse, Baustellen, Abbiegeverbote, meist auch nicht über Einbahnstraßen, so daß der Fahrer oft von seiner vorgesehenen Route abweichen muß und dann nicht mehr weiß, ob er sich dem Ziel nähert oder sich davon entfernt. Er ist gezwungen, anzuhalten, sich über seinen neuen Standort zu informieren und anhand des Plans eine neue Route zu suchen.

Zur besseren Orientierungsmöglichkeit ist für solche Fälle auch bereits vorgeschlagen worden, mit Hilfe einer Koppelnavigationseinrichtung ein Fadenkreuz über einer Landkarte bzw. einem Stadtplan so zu steuern, daß stets der eigene Standort gekennzeichnet wird. Dies erfordert aber nicht nur maßstabsgerechte und speziell für die Fahrzeugeinrichtung geeignete Karten, sondern auch eine auf verschiedene Maßstäbe umstellbare Einrichtung, da zumindest zwischen der Orientierung im Stadtgebiet und der Orientierung bei Überlandfahrten Karten verschiedener Maßstäbe gewählt werden müssen. Der entscheidende Nachteil dieser bekannten Einrichtung besteht jedoch darin, daß der Autofahrer jeweils nur seinen Standort, nicht aber sein Ziel angezeigt erhält, so daß er immer wieder gezwungen ist, anzuhalten, sein Ziel auf dem Plan zu suchen und von dem angezeigten Standort aus seine Fahrtrichtung zu wählen.

Aufgabe der Erfindung ist es, eine autarke Navigationseinrichtung mit Koppelnavigation der eingangs erwähnten Art so auszubilden, daß dem Fahrer eines Straßenfahrzeugs eine Orientierungshilfe vom Startpunkt bis zum Ziel zur Verfügung steht, die ohne weiteren Eingriff während der Fahrt ständig zur Verfügung steht und die auch während des Fahrens mühelos zu erkennen und zu befolgen ist.

Erfindungsgemäß wird diese Aufgabe bei einer Einrichtung der eingangs erwähnten Art dadurch gelöst, daß eine Eingabeeinrichtung vorgesehen ist, über welche jeweils ein bestimmtes Fahrtziel mit seinen relativen Zielkoordinaten gegenüber dem Ausgangsort des Fahrzeuges eingebbar und zur Bildung eines Zielvektors auswertbar ist, daß der jeweils gültige Zielvektor und der Wegvektor des jeweils zurückgelegten Fahrtweges einer Subtrahiereinrichtung zur Bildung eines neuen Zielvektors zugeführt werden und daß der jeweils gültige Zielvektor über eine nachgeschaltete Ausgabeeinrichtung nach Betrag und Richtung anzeigbar ist.

Die erfindungsgemäße Navigationseinrichtung benötigt also keine speziellen Karten in einem systemgerechten Maßstab, da die relativen Zielkoordinaten zu Beginn der Fahrt vom Benutzer eingegeben werden. Dies kann in einfacher Weise dadurch geschehen, daß der Benutzer aus einem beliebigen Stadtplan oder einer Landkarte entsprechend dem dort gewählten Maßstab die vektorielle Entfernung zwischen Startpunkt und Ziel feststellt und in Form von Koordinaten eintastet. Am einfachsten ist dies mit kartesischen Koordinaten durchzuführen, wobei der Benutzer lediglich auf seiner Karte den Abstand in Ost-West-Richtung und in Nord-Süd-Richtung abzumessen oder abzuschätzen und diese Werte in sein Eingabegerät einzugeben braucht. Die Eingabe wäre zwar auch mit Polarkoordinaten durchführbar, doch ist ein Winkel meist umständlicher zu ermitteln als eine Strecke.

Somit ist zur Benutzung der erfindungsgemäßen Einrichtung zwar zunächst auch eine Orientierung anhand einer Karte bzw. eines Stadtplanes erforderlich, doch ist dies in jedem Fall nur einmal, und zwar vor Antritt der Fahrt, notwendig. Sind die Zielkoordinaten einmal in das Gerät eingegeben, so braucht der Fahrer lediglich an seinem Anzeigegerät die Richtung und Entfernung abzulesen und entsprechend zu fahren. Selbst wenn er durch Umleitungen oder sonstige Gegebenheiten gezwungen wird, von seiner Zielrichtung abzuweichen und Umwege zu fahren, wird er immer zum Ziel zurückfinden, da sein Gerät ihm ständig anzeigt, ob er sich in der Richtung auf das Ziel befindet oder seine Richtung bei nächster Gelegenheit ändern muß. Gleichzeitig erhält er über sein Anzeigegerät die Luftlinienentfernung zum Ziel.

Die Ermittlung des Wegvektors kann in bekannter Weise mit einer Magnetfeldsonde und einem Wegzähler erfolgen. Zur Berechnung und Speicherung des Zielvektors kann beispielsweise ein bereits vorhandener Bordcomputer mitverwendet werden. Die Anzeigeeinrichtung besteht in einer bevorzugten Ausführungsform aus einem Rundinstrument, auf welchem ein Zeiger bzw. ein Pfeil die Richtung des Zielvektors anzeigt. Der Betrag des Zielvektors wird zweckmäßigerweise digital in an sich bekannter Weise ausgegeben. Zwar wäre es auch möglich, die Entfernung durch die Länge des Richtungspfeiles auszudrücken, doch wäre eine solche Anzeige besonders bei kurzen Entfernungen schwierig abzulesen; zumindest müßte eine Maßstabsumschaltung zwischen der Anzeige im Stadtgebiet und der Anzeige bei Überlandfahrten vorgesehen werden. Mit einer Digitalanzeige der Entfernung genügt es, genügend Dezimalstellen des Zählers vorzusehen, um eine genaue Anzeige in jedem Anwendungsfall zu erzielen.

Die Erfindung wird nachfolgend an einem Ausführungsbeispiel näher erläutert. Es zeigt

Fig. 1 ein Blockschaltbild für das autarke Navigationssystem in einem Fahrzeug,

Fig. 2 ein Eingabe- und Anzeigegerät im Fahrzeug,

Fig. 3 ein Beispiel für die Anwendung der Navigationseinrichtung in einem Stadtgebiet.

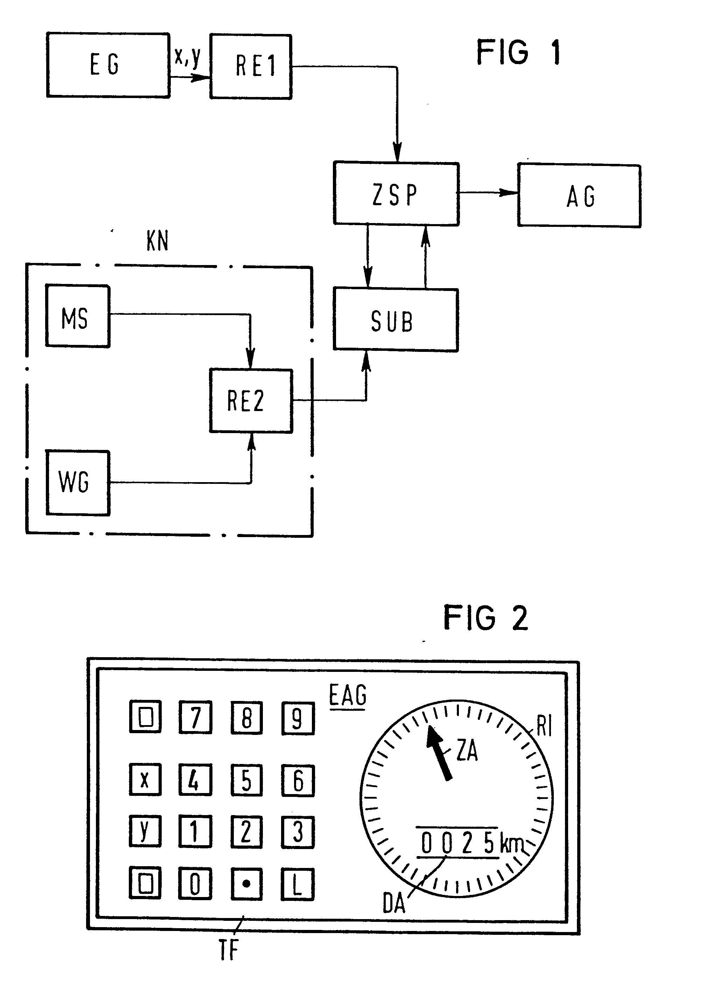

Das Blockschaltbild gemäß Fig. 1 zeigt die einfache Arbeitsweise der erfindungsgemäßen Navigationseinrichtung. Über ein Eingabegerät EG werden die relativen Zielkoordinaten $x$ und $y$ eingegeben. Diese Zielkoordinaten entsprechen der Entfernung des gewählten Fahrtzieles vom Startpunkt in Ost-West- und in Nord-Süd-Richtung. Sie werden vom Benutzer anhand eines Stadtplanes, einer Landkarte oder einer beliebigen sonstigen Unterlage ermittelt. Aus den eingegebenen relativen Zielkoordinaten $x$ und $y$ wird über die Recheneinrichtung RE1 der Zielvektor ermittelt und in den Zielspeicher ZSP eingegeben. Der Inhalt des Zielspeichers ZSP wird nach Betrag und Richtung mit dem Anzeigegerät AG angezeigt.

Sobald das Fahrzeug in Bewegung ist, wird der Zielvektor, also der Inhalt des Zielspeichers ZSP, laufend entsprechend dem zurückgelegten Weg verändert. Zu diesem Zweck wird laufend der Wegvektor nach Betrag und Richtung in einer Koppelnavigationseinrichtung KN gemessen. Hierzu dient beispielsweise eine Magnetfeldsonde MS zur Winkelmessung und ein Weggeber WG zur Streckenmessung. Aus diesen Werten wird über eine Recheneinrichtung RE2 der jeweilige Wegvektor, also Betrag und Richtung der zurückgelegten Wegstrecke gemessen und in einer Subtrahiereinrichtung SUB vom zuletzt gültigen Zielvektor vektoriell abgezogen. Zu diesem Zweck wird der zuletzt gespeicherte Zielvektor aus dem Zielspeicher ZSP in die Subtrahiereinrichtung SUB gegeben. Der aus der Subtraktion entstandene neue Zielvektor wird dann wieder in den Zielspeicher ZSP eingespeichert.

Fig. 2 zeigt ein Beispiel für eine kombinierte Eingabe- und Anzeigeeinrichtung EAG, wie sie in einem Kraftfahrzeug am Armaturenbrett untergebracht werden kann. Der Eingabeteil umfaßt ein Tastenfeld TF, welches zumindest Tasten für x und y, Tasten für die Ziffern 0 bis 9 und eine Kommataste, unter Umständen aber auch noch eine Löschtaste oder auch Tasten für weitere Funktionen enthalten kann. Der Anzeigeteil AT auf der rechten Seite enthält im wesentlichen ein Rundinstrument RI mit einer Winkelteilung sowie eine Zeigeranzeige ZA, welche beispielsweise durch Leuchtdioden, Flüssigkristalle oder sonstige bekannte Anzeigemittel gebildet sein kann. Außerdem enthält die Anzeigeeinrichtung eine Digitalanzeige für den Betrag des Zielvektors. Diese Digitalanzeige DA ist im Beispiel der Fig. 2 in das Rundinstrument RI integriert. Natürlich könnte diese Entfernungsanzeige auch an anderer Stelle angeordnet sein.

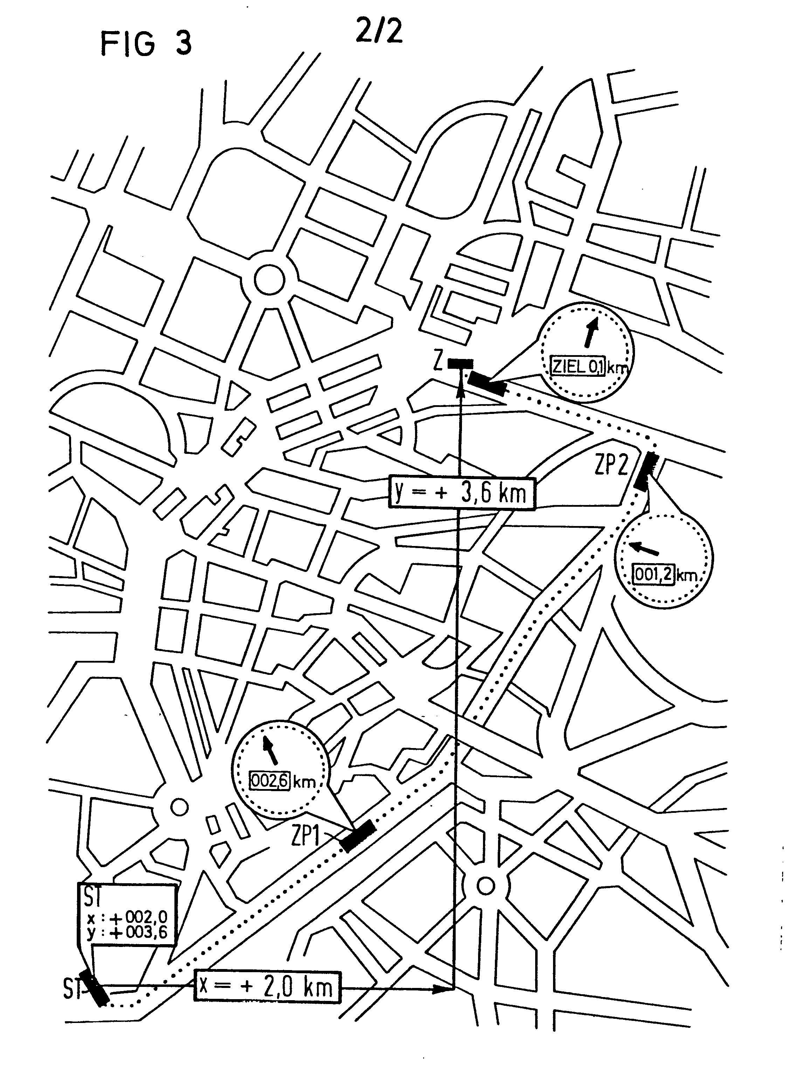

Fig. 3 zeigt schließlich anhand eines schematisierten Stadtplans die Funktionsweise des autarken Navigationssystems. In diesem Beispiel wird angenommen, daß ein Autofahrer von einem Startpunkt ST zu einem Zielpunkt Z geleitet werden will. Er entnimmt aus einem Stadtplan die relativen Koordinaten x und y des Zielpunkts Z und tastet diese in sein Eingabegerät ein. Im vorliegenden Beispiel ist also x = + 002,0 km und y = + 003,6 km.

Das Ausgabegerät zeigt ihm während der Fahrt laufend Richtung und Entfernung (Luftlinie) zu seinem Ziel an. In Fig. 3 sind nun für drei willkürlich gewählten Zwischenpunkte ZP1, ZP2 und ZP3 die für diese Punkte jeweils geltenden Anzeigen dargestellt. Am Punkt ZP1 weicht der Anzeigepfeil nur wenig von der Fahrzeugmittelachse ab. Für den Fahrer bedeutet dies, auf der Hauptverkehrsstraße zu bleiben, auf der er gerade entlang fährt. Am dargestellten Zwischenpunkt ZP2 weist der Richtungspfeil um ca. 80° nach links. Der Fahrer wählt die nächste Straße, die in dieser Richtung abzweigt.

Beim Zwischenpunkt ZP3 erkennt er, daß er sich bereits 100 m vor seinem Ziel befindet. Er kann nun mühelos vor sich das genaue Ziel Z ansteuern. Der gesamte gefahrene Weg ist in Fig. 3 mit Punkten markiert. Wie aus dieser Zeichnung zu erkennen ist, führt die kontinuierliche Anzeige der Luftlinie den Autofahrer an den gewünschten Punkt, obwohl er aufgrund der örtlichen Gegebenheiten nicht in Richtung der Luftlinie fahren kann.

4 Patentansprüche
3 Figuren

0027232

- 8 -　　　VPA　　79 P 2 4 0 5 EUR

<u>Patentansprüche</u>

1. Autarke Navigationseinrichtung für Straßenfahrzeuge, wobei im Fahrzeug über eine Weg-Meßeinrichtung sowie eine Winkel-Meßeinrichtung der jeweils zurückgelegte Fahrtweg nach Betrag und Richtung ermittelbar ist, d a d u r c h g e k e n n z e i c h n e t , daß eine Eingabeeinrichtung (EG) vorgesehen ist, über welche jeweils ein bestimmtes Fahrtziel (Z) mit seinen relativen Zielkoordinaten gegenüber dem Ausgangsort des Fahrzeuges eingebbar und zur Bildung eines Zielvektors auswertbar ist, daß der jeweils gültige Zielvektor und der Wegvektor des jeweils zurückgelegten Fahrtweges einer Subtrahiereinrichtung zur Bildung eines neuen Zielvektors zugeführt werden und daß der jeweils gültige Zielvektor über eine nachgeschaltete Ausgabeeinrichtung (AG) nach Betrag (DA) und Richtung (RZ) anzeigbar ist.

2. Navigationseinrichtung nach Anspruch 1, d a d u r c h g e k e n n z e i c h n e t , daß die Richtung des Zielvektors durch einen Pfeil (RZ) in einem Rundinstrument (RI) und daß der Betrag des Zielvektors durch eine Digitalanzeige (DA) anzeigbar ist.

3. Navigationseinrichtung nach Anspruch 2, d a d u r c h g e k e n n z e i c h n e t , daß die Digitalanzeige (DA) in das Rundinstrument (RI) integriert ist.

4. Navigationseinrichtung nach einem der Ansprüche 1 bis 3, d a d u r c h g e k e n n z e i c h n e t , daß eine kombinierte Ein- und Ausgabeeinrichtung (EAG) mit einem Tastenfeld (TF) und einem Anzeigeinstrument (RI) am Armaturenbrett eines Kraftfahrzeuges angeordnet ist.

FIG 1

FIG 2

FIG 3

ZIEL 0,1 km

Z

ZP2

y = + 3,6 km

001,2 km

002,6 km

ZP1

ST
x : + 002,0
y : + 003,6

ST

x = + 2,0 km